# EUROPÄISCHE PATENTSCHRIFT

(11) **EP 1 257 177 B1**
(45) Veröffentlichungstag und Bekanntmachung des Hinweises auf die Patenterteilung: **27.04.2005**
(21) Anmeldenummer: 01911701.9
(22) Anmeldetag: 26.02.2001
(51) Int. Cl.: A23K 3/00, A23K 1/00

(54) **VERFAHREN ZUR HERSTELLUNG VON FUTTERSTÜCKEN AUS KLÄRSCHLAMM**
METHOD FOR PRODUCING FEED PIECES FROM SEWAGE SLUDGE
PROCEDE DE PRODUCTION DE PIECES FOURRAGERES A PARTIR DE BOUES RESIDUAIRES

(30) Priorität: 24.02.2000 DE 10008667
(43) Veröffentlichungstag der Anmeldung: 20.11.2002
(73) Patentinhaber: Beilin, Isabella Ingenieurbüro, 52223 Stolberg (DE)
(72) Erfinder: VESELOVA, Marina, LV-1021 Riga (LV)
(74) Vertreter: Füssel, Michael, Dipl.-Ing.
(86) Internationale Anmeldenummer: PCT/EP2001/002151
(87) Internationale Veröffentlichungsnummer: WO 2001/062104

(56) Entgegenhaltungen:
- DE-A- 1 767 388
- DE-A- 3 226 520
- PATENT ABSTRACTS OF JAPAN vol. 017, no. 513 (C-1111), 16. September 1993 (1993-09-16) & JP 05 138197 A (TOSHIN FUKUSHI JIGIYOU KYODO KUMIAI), 1. Juni 1993 (1993-06-01)
- PATENT ABSTRACTS OF JAPAN vol. 009, no. 331 (C-321), 25. Dezember 1985 (1985-12-25) & JP 60 161800 A (NIHON HAIGOU SHIRIYOU KK), 23. August 1985 (1985-08-23)

## Beschreibung

Die Erfindung betrifft ein Verfahren zur Herstellung von Futterstücken aus Klärschlamm, der auf eine Restfeuchte zur Erzeugung von formbehaltenden Rohstücken getrocknet wird.

Klärschlamm wie er heutzutage in modernen Kläranlagen anfällt, ist eine Mischung aus Faserstoffen, meist organischen Ursprungs. Weiter sind in ihm durch moderne Reinigungsmethoden kaum noch Schwermetalle beziehungsweise halogenierte Kohlenwasserstoffe enthalten. Bei modernen Kläranlagen ist man dazu übergegangen, Stickstoff und phosphatreiche Abwasserverbindungen durch den Einsatz aerober und anaerober Gärungsprozesse zu verarbeiten. Durch diese Gärungsprozesse entstehen im Klärschlamm umfangreiche Bakterienkulturen. Diese Bakterienkulturen sind sehr proteinreich. Zugleich jedoch sind sie aufgrund der auch zum Teil anaeroben Bearbeitungsprozesse im Klärschlamm mit toxisch wirkenden Eiweißprodukten belastet. Weiterhin sind je nach Herkunftsquelle der zu Klärschlamm verarbeiteten Abfälle auch zahlreiche für den Menschen schädliche Bakterienkulturen enthalten.

Bisherige Verwendungszwecke für Klärschlamm sind daher meist in der Landwirtschaft angesiedelt. Dort wird der Klärschlamm als Bodenverbesserer beziehungsweise Düngemitel auf Felder und Wiesen ausgebracht. Die dabei absterbenden anaeroben Bakterienkulturen dienen dann, in den Boden eingebracht, als Stickstoffdünger.

Eine weitere Verwendung dieser proteinreichen Klärschlämme besteht in der Weiterverarbeitung zu Tierfutter. In diversen Verfahren werden Verarbeitungsschritte beschrieben, in denen Klärschlamm entweder zu Düngemittel oder zu Zusatzfutter verarbeitet wird.

Die DE-PS 25 23 483 C2 offenbart ein Verfahren zur Herstellung eines körnigen Zusatzfuttermittels. Hierbei wird ein Klärschlammfilterkuchen durch mechanische Behandlung auf eine Teilchengröße von höchstens 3 mm zerkleinert. Diese Teilchen werden bei einer Temperatur von unter 95°C auf einen Feuchtigkeitsgehalt von etwa 3 bis 10 Gewichtsprozent getrocknet. Danach werden sie für etwa 10 bis 30 Minuten bei einer Temperatur von 30° bis 80°C einer wässrigen alkalischen Lösung aus kondensierbarem N-Methylharnstoff ausgesetzt. Dabei ist darauf zu achten, daß der PH-Wert zwischen 3 bis 5 liegt. Nach dem Behandeln dieser Teilchen mit N-Methylharnstoff muß das dabei erhaltene körnige Reaktionsprodukt getrocknet werden. Dieses Verfahren ist nicht dazu geeignet, vorhandene krankmachende Erregerstämme im Klärschlammfilterkuchen garantiert abzutöten. Weiterhin ist durch die alkalische Behandlung eine Neutralisation eventuell toxisch wirkender Eiweißverbindungen in den Teilchen nicht garantiert.

Die DE-OS 28 12 193 A1 offenbart ein Verfahren zur Granulierung von Klärschlamm. Dabei wird der Klärschlamm mit mindestens einer Flüssigkeit und gegebenenfalls weiteren Zusätzen versetzt. Dieses Mehrphasensystem wird durchmischt. Die sich aus dem Klärschlamm und der Zugabe der Flüssigkeit und weiteren Zusätzen bildenden Feststoffgranulate werden von der flüssigen Phase abgetrennt. Die zusätzlich einzuführenden Flüssigkeiten können zum Beispiel Alkohol, Kethone und/oder Esther sein. Weiterhin können halogenierte Kohlenwasserstoffe beziehungsweise reine Kohlenwasserstoffe verwendet werden. Ebenso ist es möglich, daß das Verfahren bei einer Temperatur von 15°C bis 200°C durchgeführt wird. Das Verfahren hat den Nachteil, daß der Klärschlamm nicht in seiner Gesamtheit als solches weiterverarbeitet wird, sondern durch einzelne jeweils für sich zuzumischende Flüssigkeiten beziehungsweise Zusatzstoffe in jeweils mit diesen Zusatzstoffen reagierende Komplexe zerlegt und abgefiltert werden muß. Bei diesen komplexbildenden Prozessen ist es auch nicht ausgeschlossen, daß toxische Eiweißstoffe mit eingeschlossen werden. Weiterhin ist keine Abtötung vorhandener gefährlicher Bakterienstämme durch dieses Verfahren garantiert. Ebenso ist keine Inaktivierung vorhandener Viren durch dieses Verfahren garantiert. Um eine vollständige Verwertung des Klärschlamms nach diesem Verfahren zu erreichen, sind zahlreiche wiederholende Schritte mit unterschiedlichen Chemikalien nötig. Daher ist dieses Verfahren zur Gewinnung von Futtermitteln sehr komplex, umfangreich und teuer.

Die DE-OS 25 05 897 A1 offenbart ein Verfahren zur biologischen Aufbereitung von Güllen und Klärschlammen in flüssiger Form. Hierbei wird den Güllen beziehungsweise dem Klärschlamm eine feste Kohlenstoffquelle zugemischt. Diese Kohlenstoffquelle kann zum Beispiel feste Abfallprodukte aus Hauskehricht beziehungsweise Stroh beziehungsweise Sägemehl sein. Hierbei ist dann darauf zu achten, daß ein bestimmtes Verhältnis zwischen Kohlenstoffquelle und Stickstoffanteilen im Klärschlamm erreicht wird. Des weiteren geht es darum, diese Mischung dann zu vergären. Dies soll in einem rotierenden Rührwerk geschehen. Als Endresultat entsteht entweder ein Dünger oder ein nitratreiches Tierfutter. Der Vergärungsprozeß schließt allerdings keine Neutralisation vorhandener toxischer Eiweißprodukte im Rohmaterial mit ein. Des weiteren garantiert der aerobe Prozeß nicht, daß sich in diesem Gärungsprozeß nicht auch toxisch wirkende Bakterienkulturen in das als Viehfutter zu verwendende Material einnisten.

Die EP 0 034 872 offenbart ein Verfahren zur Verarbeitung von getrocknetem vor koaguliertem proteinenthaltendem Klärschlamm. Dieser vorkoagulierte proteinreiche Klärschlamm soll durch die Beaufschlagung mit einer 800° bis 1 000°C heißen Gasphase einer Flüssigkeit behandelt werden. Die EP 0 034 872 verspricht sich dadurch, daß durch diese hohe Hitzebeaufschlagung vorhandene Eiweiße einem Agglomerationsprozeß unterworfen werden. Nach dieser Agglomeration sollen die Eiweiße komplett deaktiviert sein. Weiter verspricht sich die Erfindung durch diese Hitzebeaufschlagung einen pasteurisierenden Effekt. Der eiweißreiche Klärschlamm wird zwar mit einer Dampfwolke von 800° bis 1 000°C beaufschlagt. Dieser Hitzeeinfluß bewirkt allerdings bei einer Einwirkdauer von etwa 20 Sekunden keine komplette Deaktivierung vorhandener hitzebeständiger Bakterienkulturen. Des weiteren wird durch die Hitzebeaufschlagung auch keine Deaktivierung im Klärschlamm enthaltener Viren erreicht, da diese Viren zum Teil einen wesentlich direkteren Hitzekontakt benötigen, als dieser durch eine Dampfwolke gegeben ist. Zudem soll der Klärschlamm nach der Behandlung eine Temperatur von 90°C aufweisen. Dies reicht nicht aus, um garantiert sämtliche Krankheitserreger im Klärschlamm abzutöten.

Es stellt sich daher die Aufgabe ein Verfahren zu entwickeln, daß durch Hitzebeaufschlagung des Klärschlamms eine Neutralisation toxischer Eiweiße sowie eine wirkungsvolle Sterilisation des Klärschlamms erreicht.

Diese Aufgabe wird gelöst durch das Verfahren gemäß Hauptanspruch 1.

Die Erfindung beschreibt ein Verfahren zur Herstellung von Futterstücken aus Klärschlamm. Der Klärschlamm kann z.B. als Abfallstoff aus sogenannten Biogasanlagen stammen. Es kann jedoch auch weiterer Klärschlamm genommen werden, wenn dieser hinreichend von Schwermetallen halogenierten Kohlenwasserstoffen etc. chemisch, mechanisch oder biologisch gesäubert wurde. Hierbei bietet es sich an, durch entsprechend konditionierte Bakterienstämme die halogenierten Kohlenwasserstoffe aufspalten zu lassen. Hierbei können dann die halogenierten Kohlenwasserstoffe als Nahrungsquelle für die Bakterienkulturen dienen. Die dann anfallenden Bakterienkulturen werden als Eiweiß- und Fettlieferant im Klärschlamm erfindungsgemäß zu Viehfutter verarbeitet.

Biogasanlagen dienen dem Zweck, Methangas zu erzeugen. Hierzu werden tierische Exkremente und Pflanzenabfallstoffe zu einem Faulprozeß zusammengeführt. Bei diesem Faulprozeß werden durch Fäulnisbakterien (Methanbakterien) Methangas und weitere flüchtige Alkohole erzeugt. Bei der Produktion beziehungsweise dem Gährungsprozeß findet eine Vermehrung dieser Methangase statt. Dieser Vemehrungsprozeß ist nur durch die vorhandene Biomasse, die zur Klärung zur Verfügung steht, begrenzt. Bei einer geschickten Konditionierung des Gärungsprozesses ist gewährleistet, daß die im Restprodukt, also in dem Klärschlamm vorhandenen Bakterienkulturen fast ausschließlich solche sind, die Methangas beziehungsweise leicht flüchtige Alkohole produzieren. Es wird davon ausgegangen, daß nach Abschluß der Gärphase mindestens 50 % der Trockensubstanz des Schlammes aus Bakterienkulturen besteht. Diese Bakterienkulturen bestehen hauptsächlich aus Eiweiß, Kohlenhydraten, Fett und Mineralien. Es ist daher der Zweck dieser Erfindung, diese Bakterienkulturen als Nahrungsmittel im Tierfutterbereich verfügbar zu machen. Die Erfindung hat erkannt, daß diesem Zwecke die Neutralisation toxischer Eiweiße sowie die Deaktivierung vorhandenen Virenmaterials und krankheitserregender Bakterienkulturen zugrunde liegen muß. Bei dieser Deaktivierung beziehungsweise Neutralisation ist eine schnelle und energiesparende Verfahrensführung wichtig. Zur effizienten Abtötung toxischer Bakterienkulturen sowie Viren sind Hochtemperaturautoklaven bekannt. Diese Verfahren scheiden jedoch hier aufgrund der Volumenbegrenzung des jeweiligen Autoklaven sowie der Erhitzungsdauer und Druckaufbaudauer aus. Die Verarbeitung über Autoklaven benötigt einen großen Maschinenpark und macht die gesamte Durchführung solcher Aufgaben unwirtschaftlich. Die Erfindung hat erkannt, daß Autoklaverhitzung zur Denaturierung von Eiweiß und Inaktivierung von Viren nicht die einzige Möglichkeit ist. Viren und Eiweiße können ebenfalls erfolgreich denaturiert werden, wenn sie mit hocherhitztem Fett in Berührung kommen. Durch den Flüssigkeitskontakt der Eiweiße mit dem heißen Fett finden umfangreiche geometrische Umfaltungen in den Eiweißmolekülen statt. Diese führen zu einer biologischen Deaktivierung der Eiweiße. Zudem werden hochmolekulare Eiweiße durch den Kontakt mit dem heißen Fett derart angeregt, daß sie in kleinere Aminobestandteile zerlegt werden.

Es ist daher erfindungswesentlich, die Klärschlammbehandlung durch heißes Öl beziehungsweise ein heißes Öl-Fett-Gemisch zum Zwecke der Gewinnung von Viehfutter aus Klärschlamm durchzuführen. Diese Methode hat zudem den Vorteil, daß für das Öl beziehungsweise Öl-Fett-Gemisch ebenfalls Abfallstoffe benutzt werden können. Es stehen aus Frittierbuden sowie anderweitigen Frittierbetrieben, zum Beispiel aus der Kartoffelchipsherstellung, Altölfette auf Speiseölbasis beziehungsweise Speisefettbasis zur Verfügung. Diese müssen entsorgt werden. Hierzu bietet es sich an, diese Fette, sofern sie nicht durch irgendwelche Rückstände belastet sind, zur Frittierung der Klärschlammteile zu benutzen. Der Klärschlamm wird, um eine möglichst schnelle umfangreiche Frittierung zu erreichen, in kleine Pellets beziehungsweise Chips geformt. Es ist allerdings ebenfalls denkbar, daß der Klärschlamm über eine Walzanlage getrocknet und gepreßt als dünner Strang oder in Form eines Flächengebildes in einen solchen Frittierbottich befördert wird. Durch den augenblicklichen Kontakt wird die im Klärschlamm enthaltene Restfeuchte augenblicklich ausgetrieben. Das Wasser verdampft quasi augenblicklich aus dem Klärschlamm. Auf dem Weg durch den Klärschlamm bläht es diesen auf. Dadurch entstehen nach dem Austreiben des Wassers Hohlräume im Klärschlammpellet beziehungsweise -chip. In diese Hohlräume kann das dünnflüssige heiße Fett eindringen. Dadurch ist es gewährleistet, daß die Pellets beziehungsweise Chips komplett von dem heißen Fett beziehungsweise Öl durchspült werden. Dadurch existiert keine Rückzugsmöglichkeit für Bakterienkulturen, Viren oder toxische Eiweiße. Sämtliche Eiweißbestandteile, wie auch immer gebunden, werden von dem Fett kontaktiert. Dies führt augenblicklich zu umfangreichen Strukturveränderungen in den Eiweißmolekülen. Diese Eiweißstrukturveränderungen führen augenblicklich zum Absterben von Bakterien beziehungsweise zur Deaktivierung von Viren. Toxische Eiweiße entfalten ihre Wirkung aufgrund bestimmter räumlicher Strukturen. Diese räumlichen Strukturen werden augenblicklich zerstört. Dadurch werden toxische Eiweiße neutralisiert. Um eine schnelle und sichere Verarbeitung zu gewährleisten, wird der Klärschlamm in einer Dicke von unter 10 mm, vorzugsweise um etwa 6 mm oder dünner in das heiße Öl beziehungsweise Öl-Fett-Gemisch eingeführt. Dieses Öl-Fett-Gemisch hat eine Temperatur von über 120°C. Vorzugsweise hat es eine Temperatur von etwa 140° bis 160°C. Je nach Verwendung des eingesetzten Fettes kann es allerdings auch erheblich höher sein. Zum Beispiel über 180° beziehungsweise wenn es das Fett zuläßt auch über 250°C. Die höheren Temperaturen führen dann auch zu einer Reduzierung der Frittierzeit. Ein zusätzlicher Vorteil der Erfindung liegt auch in der Vernichtung von BSE-Erreger-Prionen. Als optimal hat sich eine Temperatur von etwa 170°C herausgestellt.

Zur Durchführung dieses Frittierverfahrens ist ausreichend, die entsprechenden Klärschlammstücke in den Behälter mit dem heißen Fett einzuführen. Dabei tauchen die Stücke komplett unter. Da sie aufgrund ihrer Restfeuchte im allgemeinen schwerer sind als das sie umgebende Fett tauchen sie tief in das erhitzte Medium ein. Nach dem Austreiben des Wassers und Aufblähen der Klärschlammstückchen durch den austretenden Wasserdampf sind die frittierten Stückchen leichter als das sie umgebende Medium. Sie schwimmen dann auf der heißen Öloberfläche auf. Durch eine leichte Strömung in dem Ölbad lassen sich nun diese aufschwimmenden fertig frittierten Klärschlammstücke von der Klärschlammeinfuhrstelle entfernen. Nach dem Abschluß des Frittierungsprozesses können sie dann von der Oberfläche leicht abgefischt werden. Die frittierten Klärschlammstücke sind dabei von Fett gesättigt. Dies erhöht den Nährstoff- und Fettgehalt im Tierfutter. Der mit dem frittierten Klärschlamm entnommene Fettanteil kann durch einfache Nachregulierung der Fettmasse im Bottich nachgefüllt werden. Ein im Boden oder an den Seiten des Gefäßes befindlicher Thermostat und ein dazu gehöriges Heizelement sorgen dann für eine Aufrechterhaltung der zum Frittierungsprozeß nötigen Temperatur im Fett beziehungsweise Fett-Öl-Gemisch. Die Frittierdauer sollte etwa bei 55 bis 65 Sekunden liegen. Neben der Sterilisation des Klärschlamms sowie der im Klärschlamm enthaltenen Neutralisation toxischer Eiweiße bewirken die heißen Öle zudem eine Umwandlung langkettiger Kohlenwasserstoffe in Vielfachzucker.

Dadurch daß bei dem Frittierungsprozeß sämtliche biologischen Aktivitäten im Klärschlamm abgetötet werden, ist bei einer weiteren hygienischen Behandlung des Frittiergutes gewährleistet, daß bei sachgemäßer Lagerung das frittierte Gut langfristig haltbar ist. Die Denaturierung der im Klärschlamm enthaltenen Eiweiße macht diese Eiweiße für tierische Verdauungstrakte verwertbar. So wird den Tieren ein Eiweiß- und Fettreiches Nahrungsmittel zur Verfügung gestellt. Des weiteren ist es mineralreich. Daher kann es als vollwertiges Tierfuttermittel angesehen werden.

Im folgenden wird die Erfindung anhand eines Ausführungsbeispiels näher erläutert:
- Fig.1: Biogasanlage mit anschließender Pelletierungseinrichtung
- Fig.2: Klärschlammfrittierung und Abfüllung der frittierten Stücke
- Fig.3: Viehfütterung.

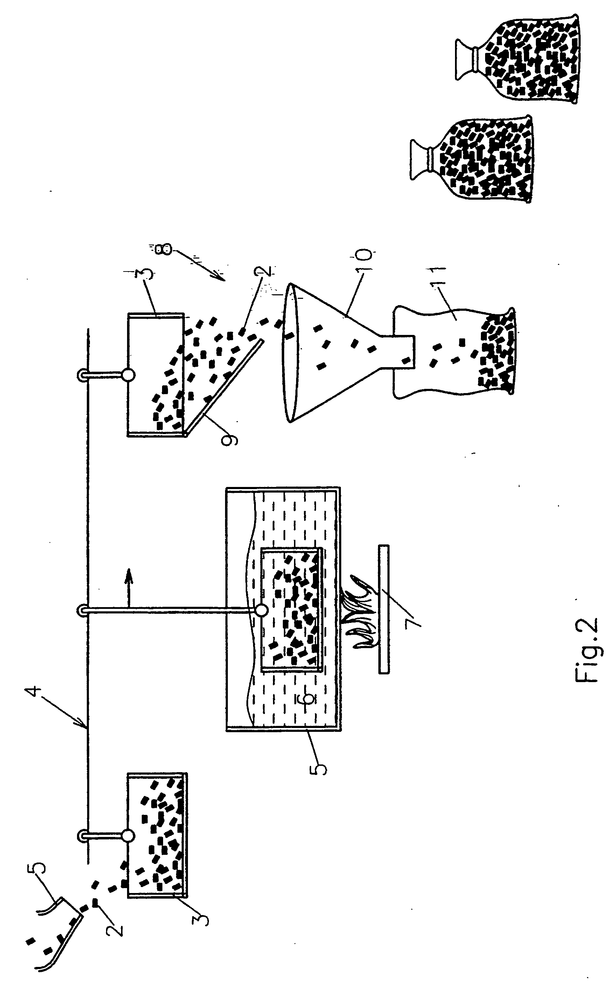

Fig.2 zeigt eine mögliche Anwendung des Verfahrens. Hierbei werden aus einem Trichter 5 kommend die Rohstücke 2 in einen Förderkorb 3 geschüttet. Die Rohstücke 2 sind scheibendünne Klärschlammstücke. Um ihre Struktur zu behalten., ist der Klärschlamm entsprechend getrocknet. Der Förderkorb 3 hängt an einer Fördereinrichtung 4. Die Fördereinrichtung 4 bringt den Förderkorb 3 über das Frittierbecken 5. Im Frittierbecken 5 befindet sich ein Öl beziehungsweise Öl-Fett-Gemisch. Dieses Öl beziehungsweise Öl-Fett-Gemisch wird von der Heizquelle 7 auf eine Temperatur von über 120°C erhitzt. Vorzugsweise sollte die Temperatur um 140° bis 160°C liegen. Je nach Öl-Fett-Gemisch kann sie allerdings auch um 250°C betragen. Die optimale Temperatur liegt bei 170°C. Der Förderkorb 3 mit den Rohstücken 2 senkt sich in das heiße Öl-Fett-Gemisch 6. Die scheibendünnen im Förderkorb 3 befindlichen Rohstücke 2 werden augenblicklich mit der Hitze des Ölbads 6 kontaktiert. Dies führt dazu, daß das als Restfeuchte in den scheibendünn ausgeführten Rohstücken 2 enthaltene Wasser augenblicklich und schnell in Dampfform ausgetrieben wird. Aufgrund der minimalen Dicke der Rohstücke 2 geschieht dies ungehindert durch umgebendes Klärschlammaterial. Bei der Austreibung beziehungsweise der Überführung des Wassers in die Gasphase entstehende Wasserdämpfe führen dazu, daß die Rohstücke 2 aufgetrieben werden. Es entstehen in ihrem Inneren Hohlbläschen. Nach der Austreibung des Wassers sind diese Hohlbläschen leer. Das heiße und dünnflüssige Öl beziehungsweise Öl-Fett-Gemisch dringt in diese Hohlbläschen ein. Dies führt dazu, daß das vom Öl kontaktierte Eiweiß schlagartig denaturiert wird. Die Hitze führt dazu, daß die Eiweiße ihre räumliche Struktur verändern. Bei langkettigen und komplexen Eiweißmolekülen kann dies sogar dazu führen, daß es sich in kürzerkettige Eiweißmoleküle beziehungsweise Bestandteile zerlegt. Diese Denaturierung der Eiweiße führt zu einer Inaktivierung eventuell vorhandenen Virenmaterials. Toxische Eiweiße verlieren aufgrund der Umstrukturierung ihrer räumlichen Ausgestaltung ihre toxischen Fähigkeiten. Im Klärschlamm vorhandene Bakterien werden durch den Kontakt mit dem heißen -Öl und dem in ihnen verdampfenden Wasser aufgebläht und explodieren. Das restliche vorhandene Eiweißmaterial wird denaturiert. Die von Bläschen durchzogenen Klärschlammrohstücke 2 saugen sich mit dem heißen Öl-Fett-Gemisch 6 voll. Die gesamte Austreibung des Wassers geschieht so schnell, daß sich um das vorhandene Eiweiß keinerlei Wasserschichten bilden können, die einen Schutz vor der Denaturierung bieten würden.

Nachdem das Wasser in Form der Restfeuchte den Rohstükken 2 ausgetrieben wurde, und sich diese Rohstücke 2 mit dem Öl-Fett-Gemisch 6 vollgesaugt haben, sind sie leichter, als das sie umgebende Öl beziehungsweise Öl-Fett-Gemisch 6. Sie schwimmen dann auf der Oberfläche des heißen Öl-Fett-Gemischs 6 auf. Der durch den Eintrag der Rohstücke entstehende Wärmeverlust wird durch die Hitzequelle 7 ausgeglichen. Nach einer Einwirkzeit von etwa zwischen 40 und 80 Sekunden vorzugsweise etwa 55 bis 60 Sekunden des Öls beziehungsweise Öl-Fett-Gemischs auf die Rohstücke 2 wird der Förderkorb wieder aus dem Öl-Fett-Gemisch herausgehoben. Das restliche anhaftende Öl, das nicht im Klärschlamm aufgesogen ist, tropft wieder zurück in das Ölbad. Die von den Rohstücken 2 durch Aufsaugen mitgenommene Ölmenge kann durch eine hier nicht gezeigte Nachfülleinrichtung wieder ausgeglichen werden. Durch die Aufnahme des Öls beziehungsweise Öl-Fett-Gemischs entsteht eine extrem kalorienreiche Tierfutternahrung die zudem aufgrund der abgetöteten Bakterienkulturen extrem proteinreich ist. Die Förderanlage 4 fährt den Förderkorb 3 zu einer Verpackungsstation 8. Hier öffnet sich der Boden 9 des Förderkorbs 3 und die frittierten Rostücke 2 fallen in einen Trichter 10. Durch diesen Trichter 10 rutschen sie in einen Transportsack 11. Nachdem eine bestimmte Menge der frittierten Rohstücke 2 durch den Trichter 10 in den Transportsack 11 gerutscht ist, wird dieser Transportsack zugebunden und beiseite gestellt. Aufgrund der kompletten Deaktivierung aller biologischen Aktivitäten durch das Frittieren ist die dabei entstandene Tierfuttermischung aus den Rohstücken 2 steril. Bei einer geeigneten kontaminationsarmen Verpackungsmethode, das heißt es werden keine Fremdbakterien eingeschleppt, ist das Futter aus den frittierten Rohstücken 2 gut und lange haltbar. Wird nebenbei darauf geachtet, daß das Futter in einer sauerstoffarmen Athmosphäre verpackt wird, so daß kein Sauerstoff zur Oxidation des im frittierten Rohstückes 2 enthaltenen Fettes zur Verfügung steht, so sind diese Stücke sogar extrem lange haltbar.

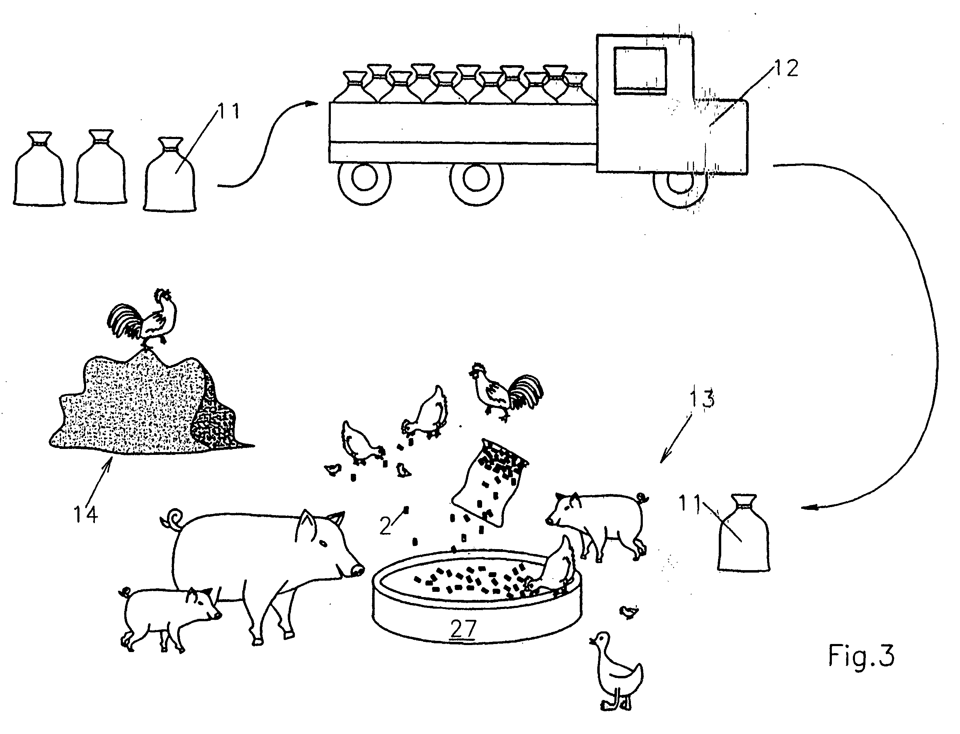

Fig.3 zeigt nun, wie diese Transportsäcke 11 mit darin enthaltenem Futtergut in Form frittierter Rohstücke 2 mit einem LKW 12 transportiert werden. Die im Transportsack 11 enthaltenen frittierten Rohstücke 2 werden dann als Viehfutter in einem Trog 27 den Tieren 13 als Futtermittel zur Verfügung gestellt. Die Ausscheidungen der Tiere 13 werden auf einem Misthaufen 14 zusammengeführt.

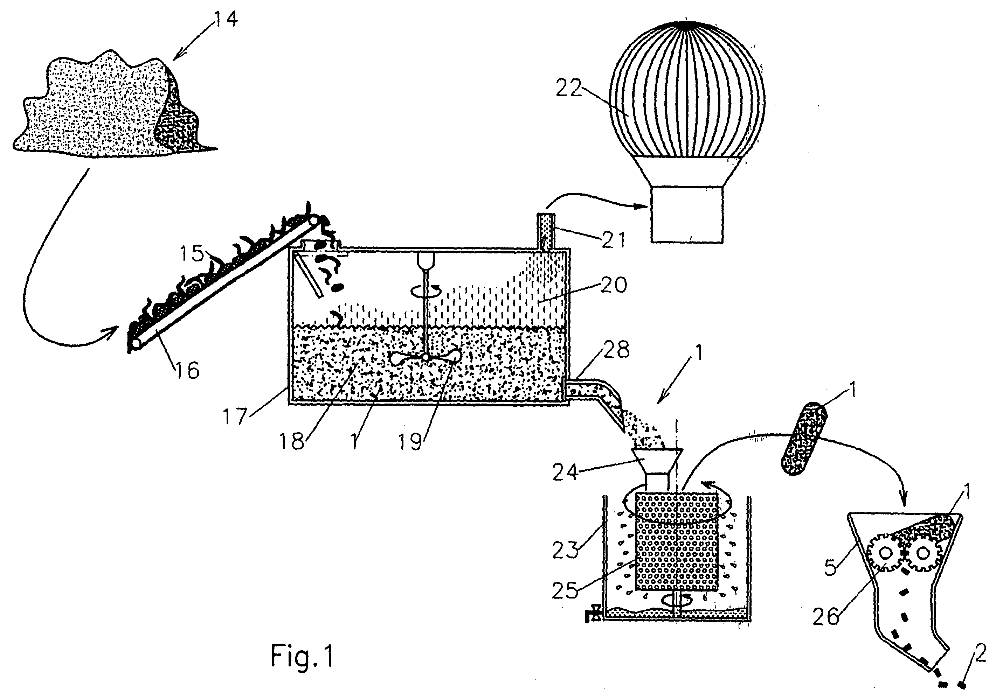

Fig.1 beschreibt nun, wie dieser Misthaufen 14 in Form kleinerer Stücke 15 über eine Transportanlage 16 in einen Gärbehälter 17 verbracht wird. Die Teile 15 werden durch geeignet zugesetzte Bakterien oder beziehungsweise in ihnen enthaltene Bakterienkulturen zu einem Gärgemisch 18. Dieses Gärgemisch 18 wird von einem Ventilator beziehungsweise einem Rotor 19 bewegt und damit durchlüftet. Dadurch kommt es zu einer Biogasproduktion. Bei dieser Biogasproduktion fällt hauptsächlich Methangas an. Um dies zu fördern, werden beziehungsweise können externe Bakterienkulturen, sogenannte Methanbakterien, zugesetzt werden. Diese sind zwar auch von Natur aus im Gärgemisch 18 enthalten, ein Zusatz verschiebt aber das biologische Gleichgewicht zugunsten der Methanbakterien. Das von den Methanbakterien im Gärprozeß in dem Gärgemisch 18 produzierte Methangas 20 wird über einen am Gärbottich 17 befindlichen Abluftstutzen 21 abgelassen. Das abgelassene Biogas kann in einem Gasbehälter 22 aufgefangen und gespeichert werden. Es steht dann zur weiteren Verwendung als Heizgas für Heizanlagen oder zum Kochen zur Verfügung. Nach dem Abschluß des Gärprozesses ist aus dem Gärgemisch 18 Methangas 20 sowie Klärschlamm 1 geworden. Dieser Klärschlamm 1 ist mit Methangas 20 produzierenden Bakterien gesättigt.

In Fig.1 wird dieser Klärschlamm 1 aus dem Gärbehälter 17 über einen Ablauf 28 entfernt. Dabei wird der Klärschlamm 1 durch einen Trichter 24 in eine Rotationsschleuder 25 gefüllt. Diese Rotationsschleuder 25 steht in einem Auffangbehälter 23. Die Rotationsschleuder 25 hat nun die Aufgabe, durch rasche rotierende Bewegung einen größtmöglichen Teil des im Klärschlamm befindlichen Wassers herauszuschleudern. Dieses herausgeschleuderte Wasser wird im Auffangbehälter 23 aufgefangen. Es kann als Düngemittel auf Felder verbracht werden. Durch die Rotation der Rotationsschleuder 25 wird der Klärschlamm auf eine Restfeuchte getrocknet, die eine gewisse Formstabilität gewährleistet. Nach diesem Trockenen wird der Klärschlamm 1 in einen Trichter 2 befördert. In diesem Trichter 5 befindet sich eine Pelletiervorrichtung 26. Diese Pelletiervorrichtung 25 preßt aus dem Klärschlamm 1 scheibendünne Rohstücke 2. Diese scheibendünnen Rohstücke sollten eine Dicke von nicht mehr als 6 mm aufweisen. Die aus dem Trichter 5 fallenden Rostücke 2 werden dann, wie in Fig.2 gezeigt, in einen Förderkorb aufgefangen.

### Bezugszeichenliste:

- 1: Klärschlamm
- 2: Rohstück
- 3: Förderkorb
- 4: Förderanlage
- 5: Frittierbehälter
- 6: heißes Öl/Öl-Fett-Gemisch
- 7: Heizquelle
- 8: Verpackungsstation
- 9: Förderkorbboden
- 10: Trichter
- 11: Transportsack
- 12: LKW
- 13: Tiere
- 14: Misthaufen
- 15: Mist
- 16: Förderband
- 17: Gärbehälter
- 18: Gärgemisch
- 19: Rotor
- 20: Biogas
- 21: Abluftstutzen
- 22: Biogasauffangbehälter
- 23: Auffangbehälter
- 24: Trichter
- 25: Klärschlammschleuder
- 26: Pelletiervorrichtung
- 27: Futtertrog
- 28: Klärschlammablauf

## Patentansprüche

1. Verfahren zur Herstellung von Futterstücken aus Klärschlamm, wobei der Klärschmlamm zunächst auf eine Restfeuchte zur Erzeugung von formbehaltenden, scheibendünnen Rohstücken von etwa 5 bis 10 mm Dicke getrocknet wird und daß anschließend die scheibendünnen Rohstücke unter Umgebungsdruck in einem Öl- oder Öl-Fett-Gemisch so lange schlagartig bei einer Temperatur zwischen 120°C und etwa 250°C frittiert werden, daß unter Austrieb der noch vorhandenen Restfeuchte die Sterilisation der Rohstücke sowie eine Denaturierung von darin enthaltenen Eiweißen bewirkt wird.

2. Verfahren nach Anspruch 1, **dadurch gekennzeichnet, daß** die Stücke so lange erhitzt werden, bis sie auf der Öl/Fett-Öl-Gemisch aufschwimmen.

3. Verfahren nach Anspruch 1 oder 2, **dadurch gekennzeichnet, daß** die fertigerhitzten Stücke von einer Siebanlage aufgefischt werden.

4. Verfahren nach einem der Ansprüche 1 bis 3, **dadurch gekennzeichnet, daß** die aufschwimmenden Stücke im laufenden Betrieb von einer Siebanlage abgefischt werden.

5. Verfahren nach einem der Ansprüche 1 bis 4, **dadurch gekennzeichnet, daß** die Öl/Fett-Öl-Mischungsmenge ständig nachreguliert wird.

6. Verfahren nach einem der Ansprüche 1 bis 5, **dadurch gekennzeichnet, daß** als Öl/Öl-Fett-Gemisch Speiseölreste beziehungsweise verbrauchtes Frittierfett benutzt werden.

7. Verfahren nach einem der Ansprüche 1 bis 6, **dadurch gekennzeichnet, daß** die Rohstücke in Chipsform gepreßt werden, das heißt flächige Gebilde mit geringer Höhe.

## Claims

1. Method for producing feed pieces out of sewage sludge, wherein the sewage sludge is firstly dried until only residual moisture remains in order to produce shape-retaining, disk-thin crude pieces having a thickness of approximately 5 to 10 mm and that then the disk-thin crude pieces are deep-fried under ambient pressure in an oil or oil-fat mixture in sudden bursts at a temperature of between 120°C and approximately 250°C for a length of time sufficient that through expulsion of the already present residual moisture, the crude pieces are sterilised and the albumen contained therein is denaturised.

2. Method as claimed in Claim 1, **characterised in that** the pieces are heated for a length of time until they float on the oil/fat-oil mixture.

3. Method as claimed in Claim 1 or 2, **characterised in that** the fully-heated pieces are fished out by a sifter.

4. Method as claimed in any one of Claims 1 to 3, **characterised in that** the floating pieces are fished out by a sifter during continuous operation.

5. Method as claimed in any one of Claims 1 to 4, **characterised in that** the oil/fat-oil mixture is continually readjusted.

6. Method as claimed in any one of Claims 1 to 5, **characterised in that** edible oil residues or waste deep-frying fat are used as the oil/oil-fat mixture.

7. Method as claimed in any one of Claims 1 to 6, **characterised in that** the crude pieces are pressed into crisp-like shapes i.e, flat objects having a small height.

## Revendications

1. Procédé pour fabriquer des aliments pour animaux à partir de boues résiduaires, selon lequel les boues résiduaires sont tout d'abord séchées jusqu'à obtention d'une humidité résiduelle pour former des pièces brutes de dimensions stables, minces comme des galettes, d'environ 5 à 10 mm d'épaisseur, puis ces pièces brutes minces comme des galettes sont brusquement frites à une pression ambiante dans un mélange huileux ou huile-graisse, à une température située entre 120°C et environ 250°C, jusqu'à provoquer la stérilisation desdites pièces et une dénaturation des protéines contenues dans celles-ci, avec une élimination de l'humidité résiduelle encore présente.

2. Procédé selon la revendication 1, **caractérisé en ce que** les pièces sont chauffées jusqu'à ce qu'elles flottent sur le mélange huileux/graisse-huile.

3. Procédé selon la revendication 1 ou 2, **caractérisé en ce que** les pièces, une fois chauffées, sont repêchées par une installation de tamisage.

4. Procédé selon l'une des revendications 1 à 3, **caractérisée en ce que** les pièces qui flottent sont repêchées en continu par une installation de tamisage.

5. Procédé selon l'une des revendications 1 à 4, **caractérisé en ce que** la quantité de mélange huileux/graisse-huile est réajustée en permanence.

6. Procédé selon l'une des revendications 1 à 5, **caractérisé en ce qu'**on utilise comme mélange huileux/huile-graisse des restes d'huile alimentaire ou de l'huile de friture utilisée.

7. Procédé selon l'une des revendications 1 à 6, **caractérisé en ce que** les pièces brutes sont pressées pour former des chips, c'est-à-dire des produits plats de faible hauteur.
